# EUROPEAN PATENT APPLICATION

(11) **EP 4 552 973 A1**
(43) Date of publication of application: **14.05.2025**
(21) Application number: 23208334.5
(22) Date of filing: 07.11.2023
(51) Int. Cl.: B64C 11/38, B64C 11/40

(54) **COMPACT AIRCRAFT ENGINE WITH VARIABLE PITCH PROPELLER AND OIL TRANSFER RING**

(71) Applicant: PAPIZTURBINE Europe GmbH, 35104 Lichtenfels (DE)
(72) Inventor: PAPIZ, Juan Manuel, 2189 Cruz alta city, Cordoba Province (AR)
(74) Representative: Eisenführ Speiser

(57) **Abstract**

The invention relates to a static hydraulic fluid transfer terminal (42) for a hollow propeller shaft (30) that rotates during operation. The hydraulic fluid transfer terminal (42) has a main body (42.1) with an inner wall enclosing a cylindrical free space (42.3). The cylindrical free space (42.3) is configured for receiving the propeller shaft (30). The inner wall of the main body (42.1) is annularly recessed to provide an annular hydraulic fluid transfer groove (42.4). At least one hydraulic fluid port (42.7) is fluidly connected to the hydraulic fluid transfer groove (42.4) for feeding a hydraulic fluid such as oil in the annular hydraulic fluid transfer groove (42.4). The main body (42.1) is composed of at least two separate body parts (42.11, 42.1.2) that are detachably fastened to each other and that are separated along a plane that extends through a longitudinal axis of the cylindrical free space (42.3).

## Description

The invention relates to a compact aircraft engine for driving a variable pith propeller and an oil transfer ring for transferring hydraulic oil into a main shaft for the propeller. The invention also relates to a gearbox for a turboprop engine for driving a variable pitch propeller.

Aircrafts with a propeller engine often times have a propeller with a variable propeller blade pitch for adapting the pitch to the airspeed of the aircraft and/or the power or rotation speed of the engine during operation, in particular during a flight. One kind of variable pitch propellers are constant-speed propellers where the blade pitch is automatically controlled for maintaining a constant rotation speed of the propeller. Propellers with adjustable blade pitch can be controlled so as to provide an increased blade pitch when the airspeed is increased. Thus, the efficiency of the propeller is improved.

Small aircrafts are typically powered by piston engines while larger aircrafts are typically powered by turboprop engines or jet engines. Small aircrafts require compact and lightweight engines. Preferably, aircraft engines with that drive a propeller, i.e. piston engines and turboprop engines, are equipped with means pro propeller pitch adjustment and control.

Known ways to alter the propeller pitch are a hydraulic pitch control with pressurized oil, an electro-mechanical pitch control with electric actuators and a pitch control by means of weights and centrifugal forces. Hydraulic pitch control of propeller blades of an aircraft engine by means of an hydraulic fluid that passes through a central passage way of a propeller shaft is inter alia disclosed in EP 3 476 723 B1 or US 2010/0008779 A1.

Gas turbine engines in particular turboprop engines are generally known. A turboprop engine comprises a gas turbine that drives a propeller via a reduction gear. The gas turbine engine comprises a compressor, a combustion chamber and a turbine. The compressor is fed with air from the environment, compresses the air and feeds the compressed air to the combustion chamber. In the combustion chamber, the compressed air is mixed with fuel and the mixture is ignited and combusts. The hot combustion gases then drive a gas turbine that in turn drives the compressor and the propeller.

A turboprop engine is typically used as an aero engine that creates thrust by means of the propeller. The thrust of the hot combustion gases at the exhaust of the turbine does not significantly contribute to the engine's overall thrust.

In general, gas turbine engines can comprise an axial compressor or a centrifugal (i.e. radial) compressor. The gas turbine of the gas turbine engine in most cases is an axial turbine with one or more turbine stages. Turboprop gas turbine engines can have separate turbines for driving the propeller and for driving the compressor. Alternatively, the compressor can be fixed to the same shaft as the turbine for driving the propeller. Then, only one turbine is needed.

In a gas turbine engine, the compressor feeds high-pressure air to the combustion chamber. The combustion chamber is also known as combustor. In the combustor the compressed air is mixed with fuel and ignited. Thus, the compressed air is heated at constant pressure as the fuel/air mix burns. As it burns the fuel/air mix heats and rapidly expands. The burned mix, i.e. the combustion gases are exhausted from the combustor through the nozzle guide vanes to a turbine wheel.

The gas turbine can be an axial gas turbine comprising one or more turbine stages with nozzle guide vanes and turbine wheels (also known as turbine vanes). A nozzle guide vane is a stationary component located at the entry of a turbine stage in a gas turbine. The nozzle guide vane's function is to direct and guide the flow of high-velocity hot gases from the combustion chamber onto the turbine blades. The nozzle guide vane also helps to optimize the velocity and pressure of the gases entering the turbine stage, which can improve the efficiency and performance of the engine.

For larger airplanes, gas turbine engines and turboprop engines are the most secure and efficient aero engines. Gas turbine engines and turboprop engines having a size, weight and power suiting smaller airplane, however, suffer from a very high consumption and thus are economically not feasible.

While turboprop engines typically are used for larger airplanes, small airplanes typically are powered by piston engines, for instance air cooled boxer engines providing a power between 100 and 400 kW. While turboprop engines have proven to be very reliable, replacing less reliable piston engines with turboprop engines typically is not feasible, because the efficiency of turboprop engines suffers from downscaling. This results in higher fuel consumption.

It is an object of the invention to provide an engine for driving a variable pitch propeller of small airplanes.

According to a first aspect, a static hydraulic fluid transfer terminal for a hollow propeller shaft that rotates during operation is provided. The hydraulic fluid transfer terminal (Transfer Ring) has a main body with an inner wall enclosing a cylindrical free space. The cylindrical free space is configured for receiving the propeller shaft. The inner wall of the main body is annularly recessed to provide an annular hydraulic fluid transfer groove. At least one hydraulic fluid port is fluidly connected to the hydraulic fluid transfer groove for feeding a hydraulic fluid such as oil in the annular hydraulic fluid transfer groove. The main body is composed of at least two separate body parts that are detachably fastened to each other and that are separated along a plane that extends through a longitudinal axis of the cylindrical free space.

The inventor has found that due to the small space inside the gear box of the compact turboprop engine, a standard hydraulic fluid transfer terminal would not fit. Therefore, a novel hydraulic fluid transfer terminal is proposed that can be used outside the engine and can be fixed to the gear box or crankcase and taking the oil externally through oil lines and passing the oil pressure with holes in the propeller shaft. Because the two body parts can be separated along a central plane that extends through a longitudinal axis of the cylindrical free space, the body parts and thus the hydraulic fluid transfer terminal (Transfer Ring) can be easily attached around the propeller shaft.

According to a preferred embodiment, the at least two separate body parts of the main body are fastened to each other by at least two screws, that are arranged on opposite sides of the longitudinal axis of the cylindrical free space. Thus, the body parts of the main body can be reliably attached to each other and separated from each other when needed.

The inner wall of the main body preferably has at least two narrow inner wall sections with an inner diameter that closely corresponds to an outer diameter of the propeller shaft, said annular hydraulic fluid transfer groove being arranged between the at least two narrow inner wall sections.

The narrow inner wall sections preferably are both provided with annular recesses that are holding a first inner seal ring and a second inner seal, respectively. This improves the sealing between the rotating propeller shaft and the static hydraulic fluid transfer terminal.

For attaching the hydraulic fluid transfer terminal to a static component of an engine, the main body preferably comprises at least one mounting aperture. Preferably, the main body comprises a plurality of mounting aperture, each having a longitudinal axis that extends in parallel with a central axis of the inner free space. This allows mounting of the hydraulic fluid transfer terminal to a housing through which the propeller shaft extends.

According to a preferred embodiment, the main body has a planar front face, a planar rear face and a circumferential outer wall that at least in part has a cylindrical shape. The outer circumferential wall preferably comprises a planar portion where hydraulic connector fittings of the hydraulic fluid port are mounted.

According to a preferred embodiment, the hydraulic fluid port comprises an oil inlet port and an oil return port that both are fluidly connected to the annular fluid transfer groove via a respective bore that serves as a hydraulic fluid passage way. The provision of an oil inlet port and an oil return port allows a circulating of the hydraulic fluid in case the fluid pressure in the fluid passage way of the propeller shaft exceeds a threshold pressure. According to the preferred embodiment, the hydraulic fluid transfer terminal has two ports where the hydraulic fluid enters and returns when the pressure exceeds the admitted working oil pressure.

For further improving the sealing, preferably an external seal ring is attached to a front face or a rear face or both of the main body. The external seal ring preferably comprises an elastomeric lip seal that circumferentially contacts the propeller shaft.

According to a particularly preferred embodiment, a hydraulic fluid transfer terminal is provided that has two separate hydraulic fluid transfer grooves, each hydraulic fluid transfer groove being fluidly connected to a hydraulic fluid port.

An assembly comprising a hydraulic fluid transfer terminal with two separate hydraulic fluid transfer grooves preferably further includes a hollow propeller shaft with a central oil passage way and two radial bores that are spaced from each other at least in a longitudinal direction of the propeller shaft wherein the distance of the two radial bores in the longitudinal direction of the propeller shaft corresponds to the distance of the two hydraulic fluid transfer grooves of the hydraulic fluid transfer terminal. According to a preferred embodiment, the two radial bores extend in different radial directions with respect to the propeller shaft in order to avoid a loss of strength of the propeller shaft.

The hydraulic fluid transfer terminal may have two circular slots that are aligned with the holes in the shaft to always maintain the possibility to pass the oil from the static hydraulic fluid transfer terminal to the radially extending holes in the shaft.

The hydraulic fluid transfer terminal must be sealed while the shaft is rotating so the shaft preferably is specially shaped where the hydraulic fluid transfer terminal is applied to ensure proper sealing. According to a further aspect, a propeller shaft having a central oil passage way and at least one radial bore that extends between the central fluid passage way and an external circumferential wall portion of the propeller shaft is provided, wherein the external circumferential wall portion of the propeller shaft belongs to a longitudinal section of the propeller shaft, that has a reduced diameter for receiving a hydraulic fluid transfer terminal according to the invention. This addresses the aspect that the propeller shaft preferably is provided with a special shape to contain the hydraulic fluid transfer terminal. However, in other embodiments the hydraulic fluid transfer terminal can be adapted to propeller shafts that do not have a special shape. This is in the matter of a possible use in other applications.

In order to provide a tight sealing, the hydraulic fluid transfer terminal is composed of two parts that can be separated for assembly over the shaft.

The hydraulic fluid transfer terminal has special mechanical seals at the front and the rear part of the hydraulic fluid transfer terminal to avoid any leakage of hydraulic fluid.

This hydraulic fluid transfer terminal is particularly suitable for small turboprop engines but can be used in other applications, for instance in piston engines.

Further preferred features and advantages will be apparent from the disclosure of exemplary embodiments. Additional aspects of the present invention will become more readily apparent from the detailed description, particularly when taken together with the drawings.
- Figure 1:: illustrates an embodiment of a turboprop engine comprising a gas turbine according to the invention;
- Figure 2:: is a further, more detailed illustration of a turboprop engine comprising a gas turbine according to the invention;
- Figure 3:: is a perspective from an exploded view of a gearbox housing front part with a propeller shaft and an oil transfer terminal according to the invention;
- Figure 4a:: is a lateral exploded view of the gearbox front housing part, the propeller shaft and the oil transfer terminal;
- Figure 4b:: is a side view of the fully assembled assembly comprising the gearbox front housing part, the propeller shaft and the oil transfer terminal;
- Figure 5:: is a longitudinal cross-sectional view of the fully assembled assembly comprising the gearbox front housing part, the propeller shaft and the oil transfer terminal along the line E-E as indicated in figure 4b;
- Figure 6:: is a perspective view of an assembled hydraulic fluid transfer terminal according to the invention;
- Figure 7:: is a perspective, exploded view of the hydraulic fluid transfer terminal of figure 6;
- Figures 8a and 8c:: are side views of the hydraulic fluid transfer terminal of figures 6 and 7;
- Figure 8b:: is a front view of the hydraulic fluid transfer terminal of figures 6 and 7; and
- Figure 8d:: is a cross-sectional view along a plane as indicated in figure 8b of the hydraulic fluid transfer terminal.

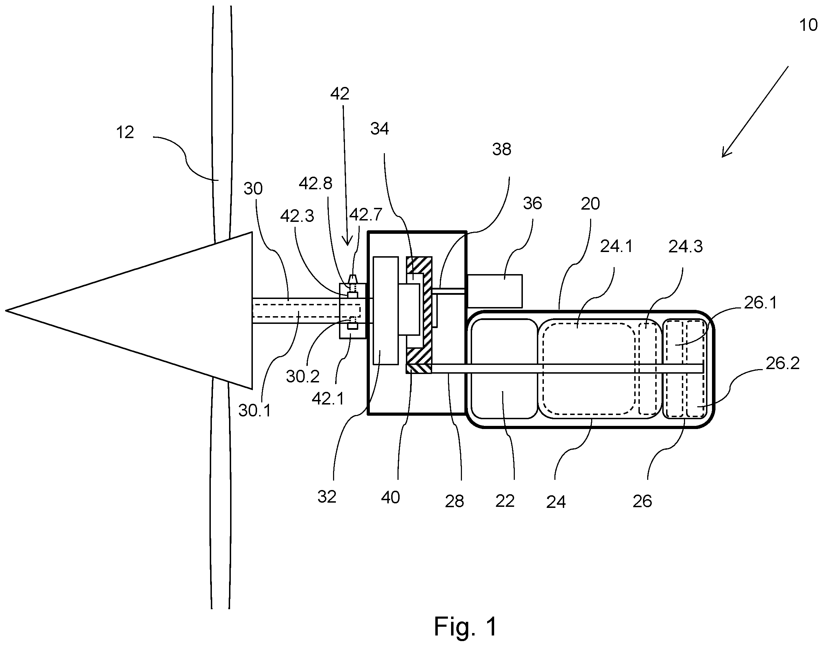

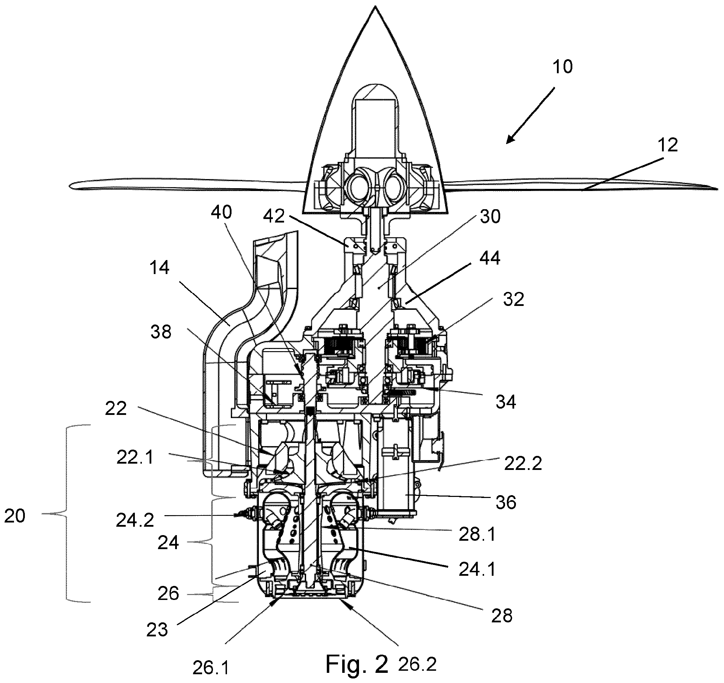

As illustrated in figures 1 and 2, the main components of a turboprop engine 10 are a gas turbine assembly 20 that can drive a main shaft 30 of a propeller 12 via a reduction gear. The reduction gear comprises a helical reduction gearing 40, a centrifugal clutch 34 and a planetary reduction gear 32.

The gas turbine assembly 20 comprises a compressor 22, for instance a centrifugal compressor with an impeller 22.1 that aspires air from the environment through an air intake 14. Compressed air provided by the centrifugal compressor 22 is fed through a diffuser 22.2 into an open space 23 surrounding a combustion chamber 24.1 of a combustor 24. The compressed air enters the combustion chamber 24.1 from the open space surrounding the combustion chamber 24.1. In the combustion chamber 24.1, the compressed air is mixed with fuel injected into the combustion chamber 24.1 by a fuel injection nozzle 24.2. The fuel combusts and hot exhaust gases are fed to the gas turbine 26. The combustion chamber 24.1 can for instance be an annular combustion chamber 24.1 with an outlet nozzle 24.3 for the hot exhaust that feeds the hot exhaust to the gas turbine, for instance an axial turbine 26. The axial turbine 26 drives the centrifugal compressor 22 and - via the planetary reduction gear 32 - the propeller 12. The turbine shaft 28 extends through a shaft tunnel 28.1.

The turboprop engine 10 as shown in figure 1 comprises a gas turbine assembly 20 with a single turbine stage 26. The gas turbine assembly 20 comprises a stationary nozzle guide vane 26.1 and a turbine wheel 26.2 that is connected to a gas turbine shaft 28. The gas turbine shaft 28 is also connected to the centrifugal compressor 22. Accordingly, gas turbine 26 can drive compressor 22 of turboprop engine 10. Turbine shaft 28 is also connected to a reduction gear 32 that in turn is connected to a propeller 12 by means of gas turbine assembly 20. For starting the gas turbine assembly 20, a starter/generator 36 is provided. The starter/generator 36 can drive the turbine shaft 28 via a starter gearbox 38.

During operation, the compressor 22 takes air from the environment, compresses the air and pushes the compressed air into the combustion chamber 24.1 wherein the compressed air is mixed with fuel and combusted by a spark. The combustion chamber nozzle 24.3 directs the resulting flow of hot combustion gases to the axial turbine 26. The axial turbine 26 comprises a single turbine stage with the nozzle guide vane 26.1 and the single turbine wheel 26.2. As mentioned above, the turbine wheel 26.2 drives the turbine shaft 28 that is connected to the centrifugal compressor 22 and the planetary reduction gear 32. The rotation speed of the turbine shaft 28 is reduced by the helical reduction gearing 40 and the planetary reduction gear 32 to a fraction in order to provide a rotation speed that is suitable for driving a standard propeller 12.

A number of improvements contribute to a more efficient turboprop engine providing a power between 100 kW and 400 kW.

The planetary reduction gear 32 is placed in a gearbox housing (or gearing housing) with a gearbox housing front part 44. As can be seen in figure 2, propeller shaft 30 is extending from the planetary reduction gear 32 through the gearbox housing front part 44 to a hub of propeller 12.

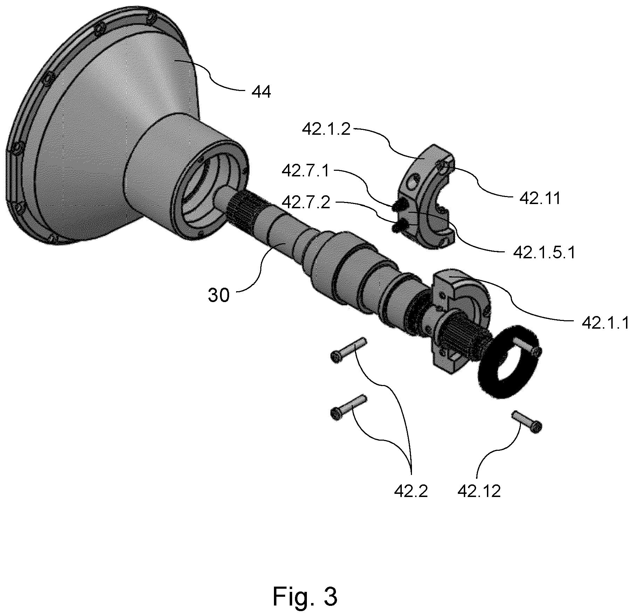

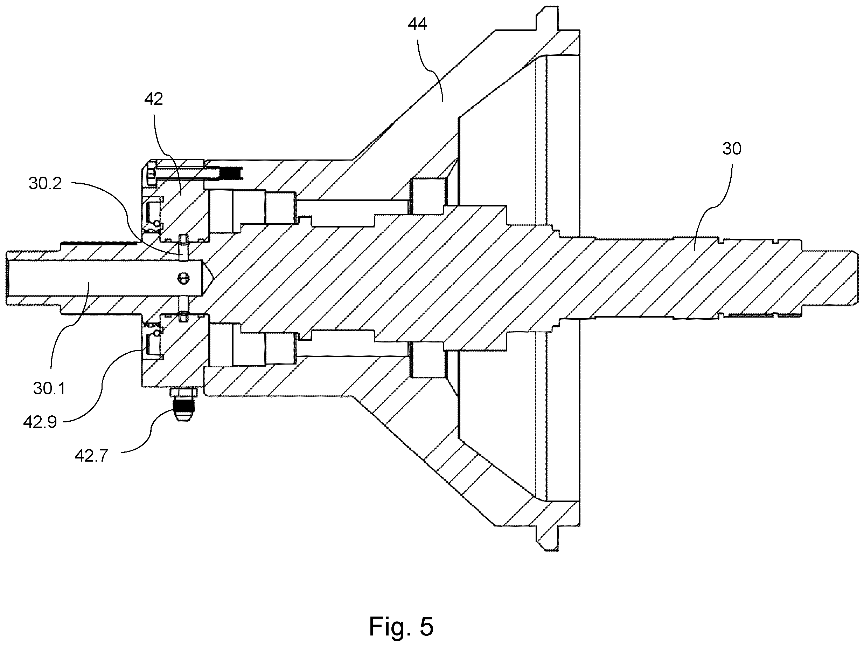

Figure 3 is an exploded, perspective view showing the gearbox housing front part 44 and the propeller shaft 30. According to the invention, a dedicated hydraulic fluid transfer terminal 42 - herein also called oil transfer terminal 42 or oil transfer ring 42 - is provided that can be externally attached to the gearbox housing front part 44 as shown in figures 3, 4a, 4b and 5. From the cross-sectional view as shown in figure 5 it is apparent, that the hydraulic fluid transfer terminal 42 is attached to the front of the gearbox housing front part 44. The hydraulic fluid transfer terminal 42 encloses the propeller shaft 30 where the propeller shaft 30 is provided with lateral bores 30.2 that extend between the central oil passage way 30.1 and the outer circumferential wall of propeller shaft 30. The hydraulic fluid transfer terminal 42 is screwed to the front of the gearbox housing front part 44. In order to mount the hydraulic fluid transfer terminal 42 after assembling the planetary reduction gear 32, the propeller shaft 30 and the gearbox housing with gearbox housing front part 44, the hydraulic fluid transfer terminal 42 comprises a main body 42.1 that is comprised of two parts 42.1.1 and 42.1.2 that are held together by means of at least two fastening screws 42.2; see figure 3. Fastening bolts 42.12 serve for attaching the hydraulic fluid transfer terminal 42 to the front of the gearbox housing front part 44.

For hydraulic pitch control of the propeller 12, the main shaft 30 is provided with a central oil passage way 30.1 as generally known from the prior art and shown in figure 5. Accordingly, the hydraulic actuators on the propeller side needed for the propeller pitch control can be those already known and used in the art. This allows using known propellers with hydraulic pitch control.

As in the prior art, the pitch of the propeller blades is hydraulically controlled by pressing oil through the central oil passage way 30.1 of the propeller main shaft 30.

Since the hydraulic fluid, for instance the oil for hydraulically controlling the propeller blade pitch may be fed into the central passage way with some considerable pressure, it is important, that the connection between a static hydraulic fluid transfer terminal - for feeding hydraulic fluid into the central passage way of the rotating shaft or receiving oil out of the passage way of the rotating shaft - and the rotating shaft is tight. Typically, the static member for feeding or receiving hydraulic fluid into or from a central passage way of a propeller shaft is arranged within for instance a crankcase of an engine. This requires that a hydraulic pump must feed the hydraulic fluid into the crankcase.

The instant static hydraulic fluid transfer terminal 42 can be arranged at any place around the propeller shaft 30, i.e. within a crankcase or outside of a crankcase or gear box. Therefore, it is possible to implement a hydraulic pitch control system that is completely independent from a crankcase or a gearing housing.

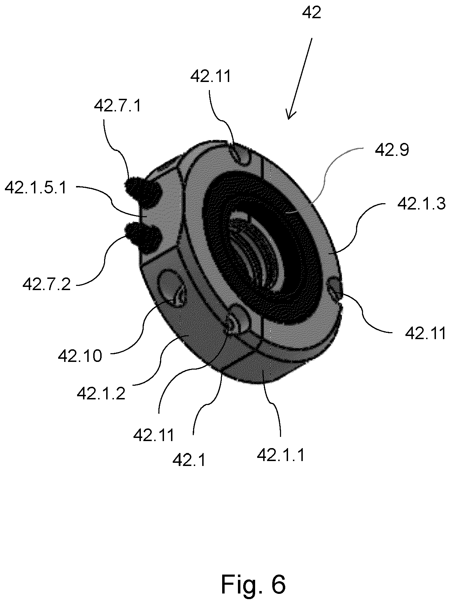

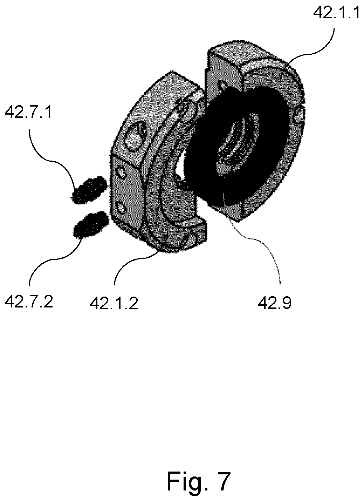

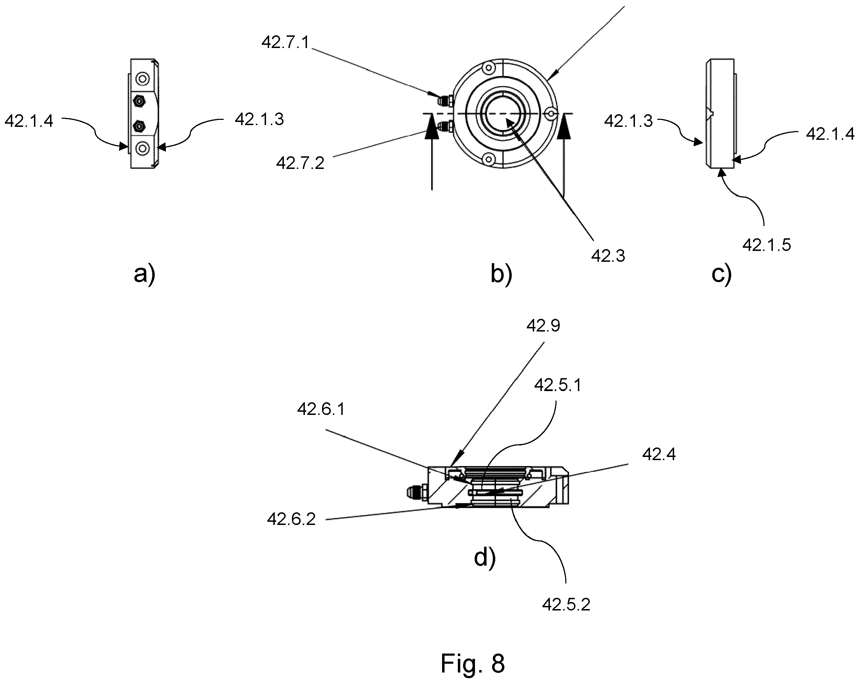

Figure 6 illustrates an embodiment of the static hydraulic fluid transfer terminal 42 in its fully assembled state. Figure 7 is a perspective exploded view of the static hydraulic fluid transfer terminal 42. Figures 8a, 8b, 8c and 8d illustrate different views of the oil transfer terminal 42.

The main body 42.1 has an inner wall enclosing a cylindrical free space 42.3 that is configured for receiving the propeller shaft 30. The inner wall of the main body 42.1 is provided with an annular recess 42.4 that defines an annular hydraulic fluid transfer groove 42.4. The annular hydraulic fluid transfer groove 42.4 is arranged between two narrow inner wall sections 42.5.1 and 42.5.2 having an inner diameter that closely corresponds to an outer diameter of the propeller shaft 30. The diameter of the annular hydraulic fluid transfer groove 42.4 is larger than the diameter of the narrow inner wall sections 42.5.1 and 42.5.2.

At least one hydraulic fluid port 42.7 is fluidly connected to the hydraulic fluid transfer groove 42.4. In order to allow circulation of the hydraulic fluid, the hydraulic fluid port 42.7 comprises an oil inlet port 42.7.1 and an oil return port 42.7.2 that both are fluidly connected to the annular fluid transfer groove 42.4 via a respective bore 42.8 that serves as a hydraulic fluid passage way. The hydraulic fluid inlet port 42.7.1 and the hydraulic fluid return port 42.7.2 are both equipped with standard hydraulic connector fittings.

When the hydraulic fluid transfer terminal 42 is arranged on the propeller shaft 30, the lateral bore 30.2 in the propeller shaft 30 opens into the hydraulic fluid transfer groove 42.4 of the hydraulic fluid transfer terminal 42. Thus, oil can flow from the hydraulic fluid transfer groove 42.6 into the radial bore 30.2 of the propeller shaft 30 and thus into the central passage way 30.1. Since the hydraulic fluid transfer groove 42.6 extends around the entire inner circumference of the hydraulic fluid transfer terminal 42, the radial bore 30.2 stays continuously in fluid contact with the hydraulic fluid transfer groove 42.6 of the hydraulic fluid transfer terminal 42 even when the propeller shaft 30 rotates while the hydraulic fluid transfer terminal 42 is static.

The hydraulic fluid transfer ring 42 has a main body 42.1 that is composed of at least two separate body parts 42.1.1 and 42.1.2 that can be separated from each other along a plane that extends through a central axis of the cylindrical inner space 42.3 defined by the assembled hydraulic fluid transfer terminal 42. Thus it is possible, to mount the hydraulic fluid transfer terminal 42 around a propeller shaft 30 without disassembling the entire engine or without disassembling the propeller shaft 30. When in place, the two body parts 42.1.1 and 42.1.2 are detachably fastened to each other by means of the at least two fastening screws 42.2. The two fastening screws 42.2 are arranged on opposite sides of the central axis of the cylindrical inner space 42.3 enclosed by the assembled hydraulic fluid transfer terminal 42.

As pointed out above, the hydraulic fluid transfer groove 42.4 is arranged between two narrow inner wall sections 42.5.1 and 42.5.2 of the cylindrical inner wall enclosing the free space 42.3 for the propeller shaft 30. Preferably, the narrow inner wall sections 42.5.1 and 42.5.2 are both provided with annular recesses for receiving a first inner seal ring 42.6.1 and a second inner seal ring 42.6.2, respectively.

Since the hydraulic fluid transfer terminal 42 can be arranged outside a crankcase or a gearbox, it is also called external oil transfer ring 42. The inner seal rings 42.6.1 and 42.6.2 are configured to closely enclose an outer cylindrical surface of the propeller shaft 30. Between the two inner seal rings 42.6.1 and 42.6.2, the circumferential hydraulic fluid transfer groove 42.4 is arranged. The inner seal rings 42.6.1 and 42.6.2 that are held in the annular recesses arranged in the inner wall of the hydraulic fluid transfer terminal 42 already provide a good sealing on both sides of the hydraulic fluid transfer groove 42.4. In order to further improve the sealing a larger, external seal ring 42.9 is provided. The external seal ring 42.9 comprises an elastomeric lip seal that circumferentially contacts the propeller shaft 30.

The outer shape of main body 42.1 is defined by a planar front face 42.1.3 and planar rear face 42.1.4 and circumferential outer wall 42.1.5 that at least in part has a cylindrical shape. The outer circumferential wall 42.1.5 comprises a planar portion 42.1.5.1 where the hydraulic connector fittings of the hydraulic fluid inlet port 42.7.1 and the hydraulic fluid outlet port 42.7.2 are mounted.

For attaching the hydraulic fluid transfer terminal 42 to a static engine component such as gearbox housing front part 44, three mounting apertures 42.11 are provided. Thus, the hydraulic fluid transfer terminal 42 can be attached to a static engine part by means of fastening bolts 42.12 extending through the mounting apertures 42.11 and fastened to the stationary engine component.

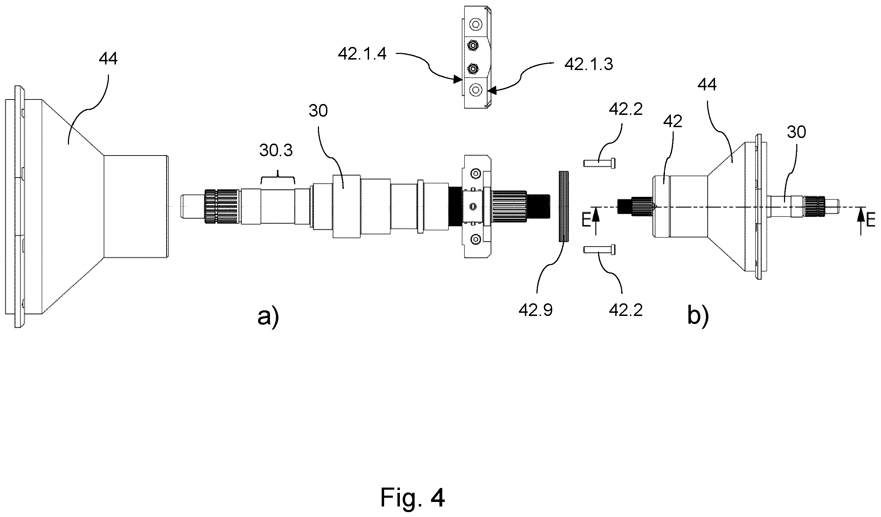

According to the preferred embodiment shown in figures 4 and 5, the shaft 30 is provided with a longitudinal section 30.3 that has a reduced diameter adapted for receiving a hydraulic fluid transfer terminal 42. The at least one radial bore 30.2 extends between the central fluid passage way 30.1 and the external circumferential wall portion of the longitudinal section 30.3 of the propeller shaft 30.

According to a further preferred embodiment, a hydraulic fluid transfer terminal with two separate hydraulic fluid transfer grooves is provided wherein each hydraulic fluid transfer groove is fluidly connected to a hydraulic fluid port. For such hydraulic fluid transfer terminal, a propeller shaft with two radial bores that are spaced from each other at least in a longitudinal direction of the propeller shaft is provided. The distance of the two radial bores in the longitudinal direction of the propeller shaft corresponds to the distance of the two hydraulic fluid transfer grooves of the hydraulic fluid transfer terminal. Preferably, the two radial bores extend in different radial directions with respect to the propeller shaft in order to avoid a loss of strength of the propeller shaft.

### Reference signs

- 10: turboprop engine
- 12: propeller
- 14: air intake
- 20: gas turbine assembly
- 22: compressor of the gas turbine assembly
- 22.1: impeller
- 22.2: diffuser
- 23: open space surrounding the combustor's combustion chamber
- 24: combustor
- 24.1: combustion chamber of gas turbine assembly
- 24.2: fuel injection nozzle
- 24.3: outlet nozzle / combustion chamber nozzle
- 26: axial gas turbine stage of the gas turbine assembly
- 26.1: nozzle gas vane of the axial gas turbine
- 26.2: turbine wheel of the axial gas turbine
- 28: gas turbine shaft
- 28.1: shaft tunnel for the gas turbine shaft
- 30: main shaft, propeller shaft
- 30.1: central fluid passage way of propeller shaft 30
- 30.2: radial bore towards the central fluid passage way
- 30.3: longitudinal propeller shaft section with reduced diameter for receiving the hydraulic fluid transfer terminal
- 32: planetary reduction gear
- 34: centrifugal clutch
- 36: starter/generator
- 38: starter gearbox
- 40: helical reduction gearing
- 42: hydraulic fluid transfer terminal, in particular oil transfer ring
- 42.1: main body of the hydraulic fluid transfer ring
- 42.1.1: first body part of the main body
- 42.1.2: second body part of the main body
- 42.1.3: planar front face
- 42.1.4: planar rear face
- 42.1.5: circumferential outer wall
- 42.1.5.1: planar portion of the circumferential outer wall
- 42.2: fastening screw
- 42.3: hollow inner space enclosed by the main body
- 42.4: annular recess forming the annular fluid transfer groove
- 42.5.1: first narrow inner wall section
- 42.5.2: second narrow inner wall section
- 42.6.1: first inner seal ring
- 42.6.2: second inner seal ring
- 42.7: hydraulic fluid port
- 42.7.1: oil inlet port
- 42.7.2: oil return port
- 42.8: hydraulic fluid passage way (bore) of hydraulic fluid port
- 42.9: external seal ring
- 42.10: tapped hole
- 42.11: mounting aperture
- 42.12: fastening bolt
- 44: front part of gear box housing as one possible static engine component

## Claims

1. Static hydraulic fluid transfer terminal (42) for a hollow propeller shaft (30) that rotates during operation,
said hydraulic fluid transfer terminal (42) having
- a main body (42.1) having an inner wall enclosing a cylindrical free space (42.3) adapted for receiving the propeller shaft (30), the inner wall of the main body (42.1) being annularly recessed to provide an annular hydraulic fluid transfer groove (42.4), and
- at least one hydraulic fluid port (42.7) that is fluidly connected to the hydraulic fluid transfer groove (42.4),
**characterized in that** the main body (42.1) is composed of at least two separate body parts (42.11, 42.1.2) that are detachably fastened to each other and that are separated along a plane that extends through a longitudinal axis of the cylindrical free space (42.3).

2. Hydraulic fluid transfer terminal according to claim 1, wherein the at least two separate body parts (42.11, 42.1.2) of the main body (42.1) are fastened to each other by at least two screws, that are arranged on opposite sides of the longitudinal axis of the cylindrical free space (42.3).

3. Hydraulic fluid transfer terminal according to claim 1 or 2, wherein the inner wall of the main body (42.1) has at least two narrow inner wall sections (42.5.1, 42.5.2) with an inner diameter that closely corresponds to an outer diameter of the propeller shaft, said annular hydraulic fluid transfer groove (42.4) being arranged between the at least two narrow inner wall sections (42.5.1, 42.5.2).

4. Hydraulic fluid transfer terminal according to claim 3, wherein narrow inner wall sections (42.5.1, 42.5.2) are both provided with annular recesses that holding a first inner seal ring (42.6.1) and a second inner seal ring (42.6.2), respectively.

5. Hydraulic fluid transfer terminal according to at least one of claims 1 to 4, wherein the main body (42.1) comprises at least one mounting aperture (42.11) for attaching the hydraulic fluid transfer terminal (42) to a static engine component (44).

6. Hydraulic fluid transfer terminal according to claim 5, wherein the main body (42.1) comprises a plurality of mounting aperture (42.11), each having a longitudinal axis that extends in parallel with a central axis of the inner free space (42.3).

7. Hydraulic fluid transfer terminal according to at least one of claims 1 to 6, wherein the main body (42.1) has a planar front face (42.1.3) and planar rear face (42.1.4) and circumferential outer wall (42.1.5) that at least in part has a cylindrical shape.

8. Hydraulic fluid transfer terminal according to claim 7, wherein the outer circumferential wall (42.1.5) comprises a planar portion (42.1.5.1) where hydraulic connector fittings of the hydraulic fluid port (42.7).are mounted.

9. Hydraulic fluid transfer terminal according to at least one of claims 1 to 8, wherein the hydraulic fluid port (42.7) comprises an oil inlet port (42.7.1) and an oil return port (42.7.2) that both are fluidly connected to the annular fluid transfer groove (42.4) via a respective bore (42.8) that serves as a hydraulic fluid passage way.

10. Hydraulic fluid transfer terminal according to at least one of claims 1 to 9, wherein the hydraulic fluid port (42.7) comprises an external seal ring (42.9) that is attached to a front face (42.1.3) or a rear face (42.1.4) of the main body (42.1).

11. Hydraulic fluid transfer terminal according to claim 10, wherein the external seal ring (42.9) comprises an elastomeric lip seal that circumferentially contacts the propeller shaft (30).

12. Hydraulic fluid transfer terminal according to at least one of claims 1 to 11, said hydraulic fluid transfer terminal having two separate hydraulic fluid transfer grooves, each hydraulic fluid transfer groove being fluidly connected to a hydraulic fluid port.

13. Assembly comprising a hydraulic fluid transfer terminal according to claim 12 and a hollow propeller shaft (30) with a central oil passage way (30.1) and two radial bores (30.2) that are spaced from each other at least in a longitudinal direction of the propeller shaft wherein the distance of the two radial bores in the longitudinal direction of the propeller shaft corresponds to the distance of the two hydraulic fluid transfer grooves of the hydraulic fluid transfer terminal.

14. Assembly according to claim 12, wherein the two radial bores (30.2) extend in different radial direction with respect to the propeller shaft in order to avoid a loss of strength of the propeller shaft.

15. Propeller shaft (30) having a central oil passage way (30.1) and at least one radial bore (30.2) that extends between the central fluid passage way (30.1) and an external circumferential wall portion of the propeller shaft (30), said external circumferential wall portion of the propeller shaft (30) belonging to a longitudinal section (30.3) of propeller shaft (30) with reduced diameter adapted for receiving a hydraulic fluid transfer terminal (42) according to at least one of claims 1 to 12.
